# EUROPEAN PATENT SPECIFICATION

(11) **EP 0 923 262 B1**
(45) Date of publication and mention of the grant of the patent: **27.07.2011**
(21) Application number: 98308308.0
(22) Date of filing: 13.10.1998
(51) Int. Cl.: H04W 48/08, H04W 16/00

(54) **Cellular multicarrier wireless communication system**
Zellulares schnurloses Mehrträgerkommunikationssystem
Système de communication sans fil, cellulaire, à porteuses multiples

(30) Priority: 11.11.1997 EP 97309036
(43) Date of publication of application: 16.06.1999
(73) Proprietor: LUCENT TECHNOLOGIES INC., Murray Hill, NJ 07974-0636 (US)
(72) Inventor: ten Brink, Stephan, 71573 Allmersback (DE); Yan, Ran-Hong, Faringdon, Oxon SN7 7SS (GB)
(74) Representative: Williams, David John

(56) References cited:
- US-A- 5 384 547
- US-A- 5 535 215
- US-A- 5 546 443
- US-A- 5 590 403
- PETROVIC R ET AL: "MULTICARRIER MODULATION FOR NARROWBAND PCS" IEEE TRANSACTIONS ON VEHICULAR TECHNOLOGY, vol. 43, no. 4, 1 November 1994, pages 856-862, XP000493416

## Description

This invention relates to cellular multicarrier wireless communication systems.

With multicarrier modulation, a data signal is split into several lower rate signals, such that the symbol time becomes large compared to the expected multipath delay spread. The subcarrier frequencies may be distributed in different ways. The simplest case is where each mobile terminal has a different but fixed (block of contiguous subcarriers. Other possibilities include hopping of the subcarriers, or the use of a random (non-contiguous) set of subcarriers. These latter options have the advantage of reducing the variance of co-channel interference.

An important feature of multicarrier modulation is the cyclic symbol extension (also referred to as guard interval, or guard time). In the downlink, signal components can be delayed by multipath propagation of the signal from the mobile's dedicated base station. As long as the delay offset of delayed signal components is within the guard time, the multicarrier signal remains undistorted for detection at the mobile terminal. The receiver can make use of the whole energy of all delayed signal components by using non-coherent detection.

In this way, multicarrier modulation avoids the need for complex equalisation to remove echoes.

Communication on a downlink or forward link from a base station to mobile terminal or user, can be distinguished into data communication on dedicated data channels, and signalling communication on dedicated signalling channels.

Conventional cellular systems apply different signalling channels in every cell. Thus, for each cell, signalling channels of neighbouring cells are either experienced as inter-cell interference, or left unused which reduces spectral efficiency.

In US-A-5546443 a control channel management technique for a radiotelephone communication system, in particular a cellular wireless communication system, is described. The system includes a plurality of microcells, an umbrella cell and a mobile switching centre. The control channel may be simulcast, that is, the same information can be broadcast at the same time on the same frequency, so that more than one cell can use a common control channel. In time division multiple access and code division multiple access special synchronising words may be transmitted.

In US-A-5590403 a two-way communication system for communication between a system network and a mobile unit over a large area is described. The system network includes a plurality of base transmitters and base receivers. The base transmitters are assigned to zones and broadcast in simulcast using multi-carrier modulation techniques.

Against this background, in accordance with the invention there is provided a cellular multicarrier wireless communication system, according to claim 1.

The ability of a multi carrier system to make use of the whole energy of all delayed signal components by using non-coherent detection allows a mobile terminal to receive a composite signal from more than one base station. Hence, multicarrier modulation together with cyclic symbol extension provides macrodiversity.

Ideally, when a signal from a base station is delayed beyond the guard time at the mobile terminal, the signal strength is sufficiently low, due to the distance from the base station, that the mobile station can accurately detect signals from closer base stations where the delay offset is inside the guard time.

The data communication is very different for each mobile terminal, since it carries e.g. voice data, or any other kind of mobile terminal specific data (e.g. multimedia data, image, etc.).

In contrast, signalling communication is not very different for each mobile terminal, since it contains information that is of relevance to all mobiles (e.g. timing reference for initial acquisition, number of mobile terminals in the system, latest billing prices, new software for terminal, time signal, or any other broadcast-like type of information).

The signalling communication also contains user specific data. Thus the signalling channels are used to control the operation of the mobile terminal, e.g. in standby mode the mobile terminal still has to listen to the signalling channel of its respective base station, since the signalling channel is used as a paging channel to wake up the terminal in case of an incoming call.

For the signalling channel the amount of information that is mobile specific, e.g. signalling information regarding the radio link protocol, is of low bit rate nature (incoming call signal, response signal for call request, etc.). That is why it is possible to use one signalling channel throughout the whole cellular system or throughout a smaller cluster of base stations. The number of subcarriers should be chosen according to the expected traffic on the signalling channel and is dependent on the number of users in system.

Signalling information is transmitted in successive frames each carrying address information identifying mobile stations for which signalling information in the frame is intended.

Signalling information could be addressed to all mobile terminals, to a set of mobile terminals or to individual mobile terminals.

The transmission of frames is prioritised in favour of frames addressed to particular mobile stations.

In order to allow a mobile terminal to distinguish which base stations it is receiving signalling from, a code division multiple access preamble may be transmitted in each frame to identify the base station from which it is transmitted.

Alternatively, a time division multiple access preamble may be transmitted in each frame to identify the base station from which it is transmitted.

The invention also extends to a mobile station for a cellular multicarrier wireless station as claimed in any preceding claim, configured to receive signalling information on a common group of subcarriers within a cluster of two or more cells, in which non coherent detection is utilised in relation to symbols modulated on subcarriers in said group, in which the base stations transmitting on the common channel are each identified from a multiple access preamble transmitted in each frame to identify the base station which has transmitted, and including means to measure the strength of the multiple access signal from each base station.

One embodiment of the invention will now be described, by way of example, with reference to the accompanying drawings, in which:
Figure 1 is a diagrammatic plan showing a cluster of three cells in a cellular multicarrier wireless communication system embodying the invention;
Figure 2 is a diagram showing how signal strength varies between two base stations in the system of Figure 1;
Figures 3a to 3c show the relative timing of symbols transmitted from two base stations at respective positions between them;
Figure 4 is a block diagram of modules in a TDMA receiver for measuring signal strength; and
Figure 5 is a block diagram of modules in a CDMA receiver for measuring signal strength.

Referring to the drawings, base stations BS1, BS2 and BS3 serve respective cells 1, 2 and 3 which are grouped in a cluster. The cluster may encompass all the cells in the system or merely a subset.

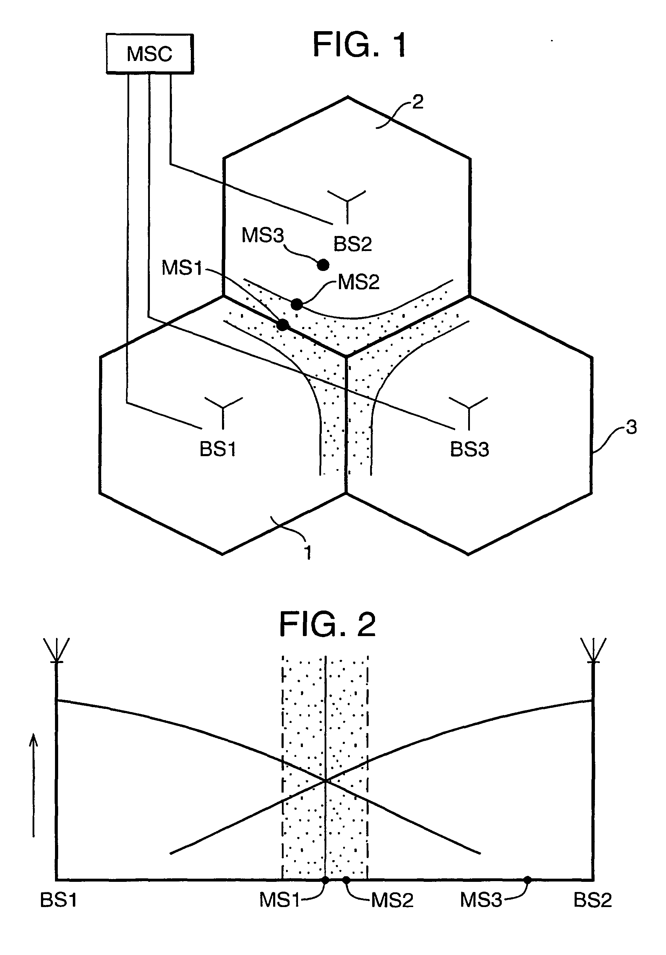

Each base station transmits synchronised signalling information on a set of sub carriers dedicated for signalling. Figure 2 shows the signal strengths of signalling subcarrier components transmitted from the base stations BS1 and BS2 at positions on a line between the base stations BS1 and BS2. As will be appreciated, the further the position is from the originating base station the smaller the subcarrier component. Figure 2 is illustrative only and is not to scale. Ideally, the composite signal power which can be detected by non coherent detection is roughly constant.

All base stations in the cluster use the same set of subcarriers for a common signalling channel, and transmit the same signals in synchronism on these subcarriers throughout the cluster of base stations. This makes it very easy for the mobile terminal to tune and to track the signalling channel. However, this may result in increased traffic in the signalling network (usually wired) that connects all the base stations.

The mobile terminal receives a sum of at least two base stations' signalling signals, resulting in a more reliable, stronger composite signalling signal at the cell boundaries. This effect is also referred to as "macrodiversity". In contrast, to achieve a similar reliability of the signalling signal at the cell boundaries of conventional systems, conventional base stations have to increase their transmit power, which is not desirable since the different signalling channels cause interference in neighbouring cells.

The mobile terminal benefits most from the common signalling channel at the cell boundaries (shaded region in drawing).

- The strong signalling signal at the cell boundaries allows a reduction in the mobile terminal's receiver sensitivity (e.g. less demanding baseband processing), in particular in standby mode (terminal, waiting for incoming calls), which directly relates to less power dissipation and thus extended standby battery time.

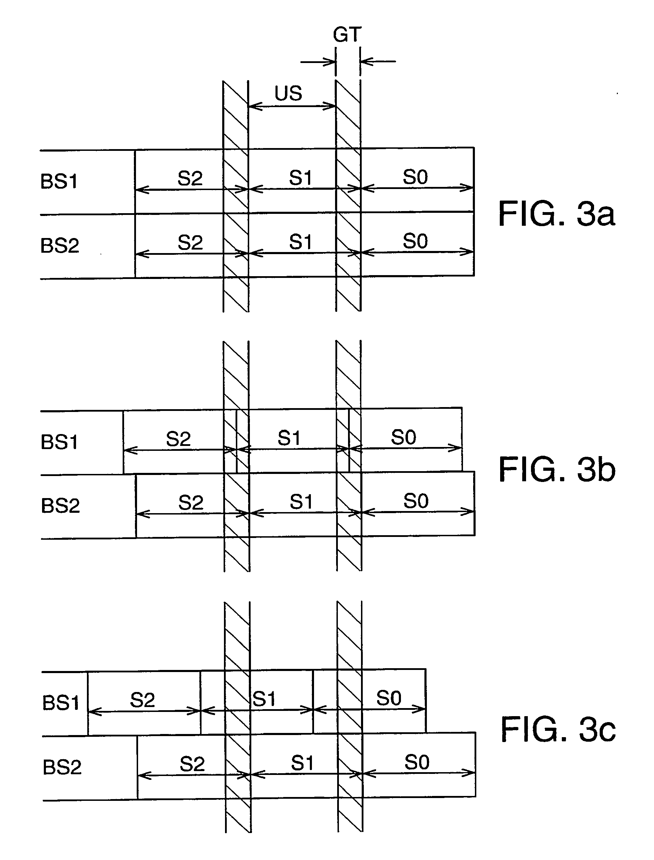

Referring to Figures 3a to 3c, the timing relation of three signalling symbols S0, S1 and S2 transmitted from the base stations BS1 and BS2 and arriving on the direct path are shown.

Figure 3a shows the relationship for a mobile station MS1 located exactly half way on the boundary between the cells. Here the symbols from the two base stations are exactly in phase as illustrated. The Figure also shows a guard time GT.

The received signal is a composite of the signals from the two base stations on which the receiver performs non coherent detection. Processing in order to make a decision as to what state the symbol has, e.g. logical 0 or logical 1, is not started until after the end of the guard time GT. As is known, the received signal is processed to determine a placement for the guard time.

In Figure 3b the relationship is shown for a mobile station MS2 which is nearer to the base station BS2. Here the beginning of the symbol S1 from base station BS1 is relatively delayed. The start of the delayed symbol is, however, within the guard time so in the period US (usable signal) a composite signal representing only the symbol S1 is processed.

In Figure 3c the relationship is shown for a mobile station MS3 which is even nearer to the base station BS2. Here the start of the symbol S1 is so delayed that it falls outside the guard time. This has the effect that the composite signal processed in the period US contains a component from the delayed symbol S0 from the base station BS1. Referring to Figure 2, this component is so small, however, that it does not cause significant interference.

The mobile stations for which signalling information is intended is indicated by means of frame addressing: the bit stream of the common signalling channel is divided into frames, whereby each frame has an address header indicating to which mobile the frame information payload is intended (e.g. address -1 means: frame contains information for all mobiles in the system). By means of this addressing all, a set of, or a single specific mobile terminal can be addressed. The signalling information is centrally controlled by a Mobile Switching Centre (MSC), see Figure 1, and may be prioritised in favour of critical user specific signalling information (incoming call, etc.).

Since the same set of subcarriers carrying the same signalling information is transmitted from all base stations, the mobile would not be able to distinguish between the signals of the different base stations. To allow for identification of which base stations the mobile terminal is receiving from, and with what signal strength, a preamble is included in each frame of the common signalling channel. This preamble may be using Time Division Multiple Access (TDMA) or Code Division Multiple Access (CDMA) technique to distinguish between different base stations.

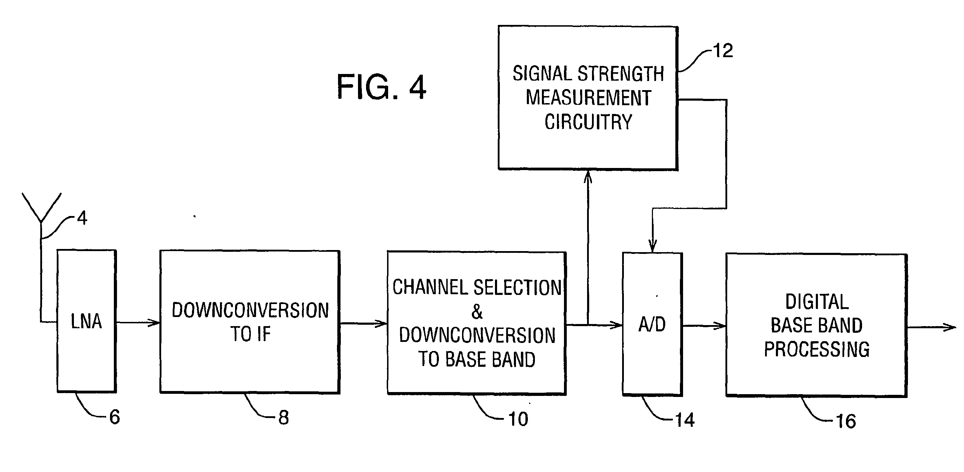

In TDMA simply N different time slots (herein equivalent to multicarrier symbols) are reserved for distinguishing N different base stations. Each base station transmits an identity signal in a time slot which is assigned to it. Time slots can be re-used by base stations which are too far apart for there to be significant interference. Different base stations re-using the same time slot use different identity signals. Referring to Figure 4, the preamble signals are received by an antenna 4 and amplified by a low noise amplifier 6. The amplified signals are converted to intermediate frequency IF in a down converter 8. The common signalling channel is selected and converted to base band in a channel selector and down converter 10. The base band signal is fed to (analog) signal strength measurement circuitry 12 where the relative strengths of different preambles are determined and the analog output is supplied to a control input of an analog to digital converter 14 to control the dynamic range of the conversion of the base band signals from the channel selector and down converter 10. The digital output signals from the analog to digital converter 14 are supplied to a base band processor to extract the identity of the base station from which the preamble was received.

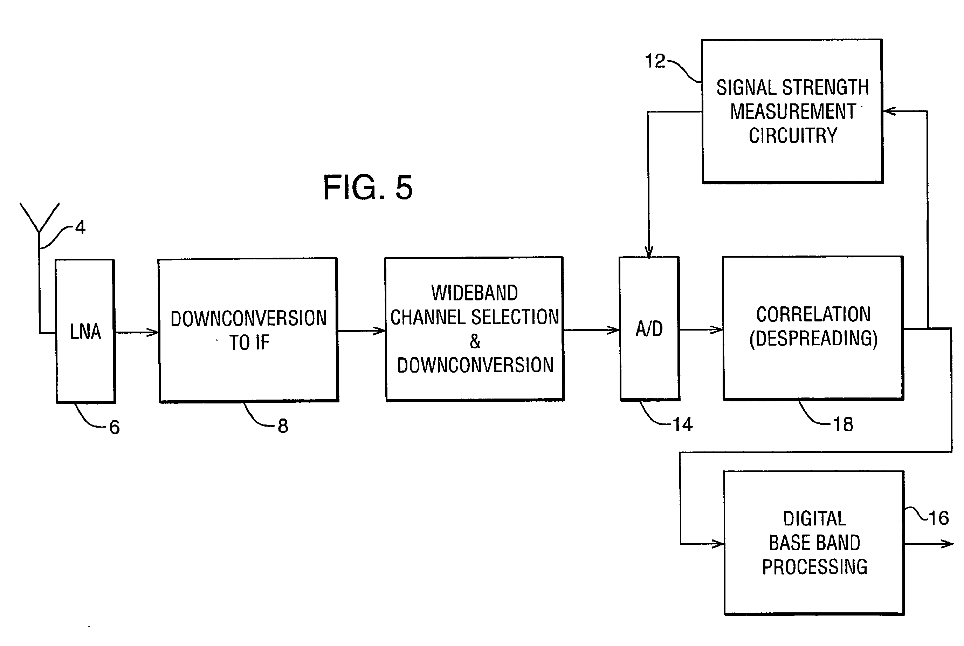

In CDMA N different channelization codes (preferably orthogonal e.g.Walsh codes) are used for distinguishing N different base stations. Again, the codes can be re-used by base stations which are sufficiently far apart. Referring to Figure 5, the apparatus is similar, except that the signal strength is measured after the different preambles have been despread in a correlator 18 which correlates the received signals with their channelization code.

The signal strength and identity of all currently received base stations are reported to the base stations where a dynamic channel allocation algorithm is used to allocate a base station and a channel, for data (e.g. voice) communication with the mobile terminal.

## Claims

1. A cellular multicarrier wireless communication system, in which base stations (BS1,BS2,BS3) for a cluster of two or more respective cells (1,2,3) are adapted to transmit the same signalling information in synchronism on the same group of subcarriers;
the cellular multicarrier wireless communication system is adapted to transmit a multiple access preamble in each frame to identify the base station from which it is transmitted and **characterised in that** the system is adapted to transmit signalling information in successive frames each carrying address information identifying mobile station (MS1, MS2, MS3) for which signalling information in the frame is intended and to prioritise transmission of frames in favour of frames addressed to particular mobile stations.

2. A system as claimed in claim 1, wherein the preamble is a time division multiple access signal.

3. A system as claimed in claim 1, wherein the preamble is a code division multiple access signal.

4. A system as claimed in any preceding claim further comprising a mobile station (MS1, MS2, MS3), the system such that the mobile station is configured
to receive signalling information on a common group of subcarriers within a cluster of two or more cells (1, 2, 3), and to utilise non coherent detection in relation to symbols modulated on subcarriers in said group, the mobile station including means for identifying each base station (BS1, BS2, BS3) transmitting on the common channel from a multiple access preamble transmitted in each frame to identify the base station from which it is transmitted, and including means to measure the strength of the multiple access signal from each base station.

## Patentansprüche

1. Zellulares drahtloses Mehrträgerkommunikationssystem, in dem Basisstationen (BS1, BS2, BS3) für einen Cluster von zwei oder mehr jeweiligen Zellen (1,2,3) angepasst sind, die gleiche Signalisierungsinformation in Synchronismus auf der gleichen Gruppe von Unterträgern zu senden;
wobei das zellulare drahtlose Mehrträgerkommunikationssystem angepasst ist, eine Präambel für Mehrfachzugriff in jedem Rahmen zu senden, um die Basisstation zu identifizieren, von der sie gesendet wird und **dadurch gekennzeichnet, dass** das System angepasst ist, Signalisierungsinformation in aufeinanderfolgenden Rahmen zu senden, wobei jeder Adresseninformation trägt, welche die Mobilstation (MS1, MS2, MS3) identifiziert, für welche Signalisierungsinformation im Rahmen beabsichtigt ist und um Übertragung von Rahmen zugunsten von Rahmen zu priorisieren, die an spezielle Mobilstationen adressiert sind.

2. System wie in Anspruch 1 beansprucht, wobei die Präambel ein Zeitmultiplex-Mehrfachzugriffssignal ist.

3. System wie in Anspruch 1 beansprucht, wobei die Präambel ein Codemultiplex-Mehrfachzugriffssignal ist.

4. System wie in einem beliebigen vorhergehenden Anspruch beansprucht, das weiter eine Mobilstation (MS1, MS2, MS3) umfasst, wobei das System derart ist, dass die Mobilstation konfiguriert ist, Signalisierungsinformation auf einer gemeinsamen Gruppe von Unterträgern innerhalb eines Clusters von zwei oder mehr Zellen (1, 2, 3) zu empfangen und nichtkohärente Detektion in Bezug auf Symbole zu verwenden, die auf Unterträgern in besagter Gruppe moduliert wurden, wobei die Mobilstation Mittel einschließt, jede Basisstation (BS1, BS2, BS3), die auf dem gemeinsamen Kanal sendet, anhand einer Präambel für Mehrfachzugriff zu identifizieren, die in jedem Rahmen gesendet wird, um die Basisstation zu identifizieren, von der sie gesendet wird und Mittel einschließt, die Stärke des Mehrfachzugriffssignals von jeder Basisstation zu messen.

## Revendications

1. Système cellulaire de communication sans fil multiporteuses, dans lequel des stations de base (BS1, BS2, BS3) d'une grappe de deux ou plusieurs cellules respectives (1, 2, 3) sont adaptées pour transmettre les mêmes informations de signalisation en synchronisation sur le même groupe de sous-porteuses ;
le système cellulaire de communication sans fil multiporteuses étant adapté pour transmettre un préambule d'accès multiple dans chaque trame pour identifier la station de base depuis laquelle il est transmis et **caractérisé en ce qu'**il est adapté pour transmettre des informations de signalisation dans des trames successives portant chacune des informations d'adresse identifiant la station mobile (MS1, MS2, MS3) à laquelle les informations de signalisation dans la trame sont destinées et donner priorité à la transmission de trames en faveur des trames adressées aux stations de base particulières.

2. Système selon la revendication 1, dans lequel le préambule est un signal d'accès multiple par répartition dans le temps.

3. Système selon la revendication 1, dans lequel le préambule est un signal d'accès multiple par différence de code.

4. Système selon l'une quelconque des revendications précédentes, comprenant en outre une station mobile (MS1, MS2, MS3), le système étant tel que la station mobile est configurée pour recevoir des informations de signalisation sur un groupe commun de sous-porteuses dans une grappe de deux ou plusieurs cellules (1, 2, 3), et utiliser une détection non cohérente relativement aux symboles modulés sur les sous-porteuses dans ledit groupe, la station mobile comportant des moyens pour identifier chaque station de base (BS1, BS2, BS3) transmettant sur le canal commun à partir d'un préambule d'accès multiple transmis dans chaque trame pour identifier la station de base depuis laquelle il est transmis, et comportant un moyen pour mesurer la force du signal d'accès multiple provenant de chaque station de base.
